# EUROPEAN PATENT APPLICATION

(11) **EP 4 752 289 A1**
(43) Date of publication of application: **03.06.2026**
(21) Application number: 25215181.6
(22) Date of filing: 12.11.2025
(51) Int. Cl.: E02F 3/32, E02F 9/08

(54) **WORK MACHINE**

(30) Priority: 28.11.2024 JP 2024207634; 28.11.2024 JP 2024207638
(71) Applicant: Yanmar Holdings Co., Ltd., Osaka-shi, Osaka (JP)
(72) Inventor: MORIGUCHI, Kazuma, Fukuoka (JP)
(74) Representative: Novagraaf International SA

(57) **Abstract**

[Problem] To provide a work machine in which connection work to a controller can be facilitated while the controller can be efficiently arranged.

[Solution] A hydraulic excavator as a work machine is a work machine including: a base plate that is located in a bottom portion of a machine body; a pair of vertical plates that are disposed to extend in a front-back direction of the machine body, on the base plate; and a controller that is arranged between the pair of vertical plates.

## Description

### TECHNICAL FIELD

The present invention relates to a work machine.

### BACKGROUND ART

Patent Document 1 discloses a construction machine in which a controller is arranged in a turning frame. The turning frame is provided with a bottom plate extending in the front-back direction and a pair of vertical plates erected on the bottom plate.

In addition, Patent Document 2 discloses a construction machine including an upper turning body and a work attachment. The upper turning body is provided with an upper frame as a base and actuator operation equipment for operating a hydraulic actuator. The upper frame is provided with a pair of left and right vertical plates across substantially the entire length of the upper frame in the front-back direction.

### PRIOR ART DOCUMENTS

### PATENT DOCUMENTS

Patent Document 1: JP-A-2019-148145
Patent Document 2: JP-A-2013-64254

### SUMMARY OF INVENTION

### TECHNICAL PROBLEMS

Meanwhile, in recent years, there has also been proposed a technique of automatically controlling a work machine such as a construction machine on the basis of construction data of a construction site, and providing the construction data and various types of information regarding the work machine to an operator of the work machine. In a case where such a technique is applied to a work machine, a space on a bottom plate as a base plate is limited particularly in a small work machine, and thus it is desirable to efficiently arrange a controller for implementing the above technique. However, even if the arrangement described above is implemented, for example, there is a risk that it is difficult to perform connection work to the controller, when access to the controller from the outside of the work machine is obstructed by a pair of vertical plates.

In addition, when the conventionally proposed technique is applied to a work machine, for example, there is a case in which it is required to add a control valve for controlling hydraulic equipment such as actuator operation equipment to a machine body including an upper turning body and a work attachment. However, particularly in a small work machine, a space on an upper frame as a base plate is limited, and thus there is a risk that it is difficult to install the control valve.

The present invention has been made to solve the above problems, and it is an object of the present invention to provide a work machine in which connection work to a controller can be facilitated while the controller can be efficiently arranged.

In addition, it is another object of the present invention to provide a work machine in which a control valve can be easily arranged.

### SOLUTIONS TO PROBLEMS

A work machine according to one aspect of the present invention is a work machine including: a base plate that is located in a bottom portion of a machine body; a pair of vertical plates that are disposed to extend in a front-back direction of the machine body, on the base plate; and a controller that is arranged between the pair of vertical plates.

A work machine according to another aspect of the present invention includes: a base plate that is located in a bottom portion of a machine body; a pair of vertical plates that are disposed to extend in a front-back direction of the machine body, on the base plate; hydraulic equipment that controls operation of the machine body; and a control valve that controls the hydraulic equipment, in which the control valve is arranged between the pair of vertical plates.

### ADVANTAGEOUS EFFECTS OF INVENTION

According to the above configuration, it is possible to facilitate connection work to a controller while efficiently arranging the controller.

In addition, according to the above configuration, it is possible to easily arrange a control valve.

### BRIEF DESCRIPTION OF DRAWINGS

Fig. 1 is a left side view showing a schematic configuration of a hydraulic excavator which is an example of a work machine according to an embodiment of the present invention;
Fig. 2 is a right side view showing a schematic configuration of the hydraulic excavator;
Fig. 3A is a block diagram schematically showing a configuration of a hydraulic system of the hydraulic excavator;
Fig. 3B is a block diagram schematically showing a configuration of a hydraulic system of the hydraulic excavator;
Fig. 4A is a perspective view as viewed from a right back side, the view showing a configuration of a turning frame provided in the hydraulic excavator;
Fig. 4B is a perspective view as viewed from a right back side, the view showing a configuration of the turning frame provided in the hydraulic excavator;
Fig. 5A is a plan view showing a configuration of the turning frame;
Fig. 5B is a plan view showing a configuration of the turning frame;
Fig. 6A is a plan view showing an arrangement configuration of a controller and the like arranged on the turning frame;
Fig. 6B is a plan view showing an arrangement configuration of a control valve and the like arranged on the turning frame;
Fig. 7A is a perspective view as viewed from a left back side, the view showing an arrangement configuration of the controller and the like;
Fig. 7B is a perspective view as viewed from a left back side, the view showing an arrangement configuration of the control valve and the like;
Fig. 8A is a perspective view as viewed from a left front side, the view showing an arrangement configuration of the controller and the like;
Fig. 8B is a perspective view as viewed from a left front side, the view showing an arrangement configuration of the control valve and the like; and
Fig. 9 is a plan view showing a routing route of pipes extending from the control valve.

### DESCRIPTION OF EMBODIMENTS

An embodiment of the present invention will be described as follows with reference to the drawings.

### [1. Schematic configuration of work machine]

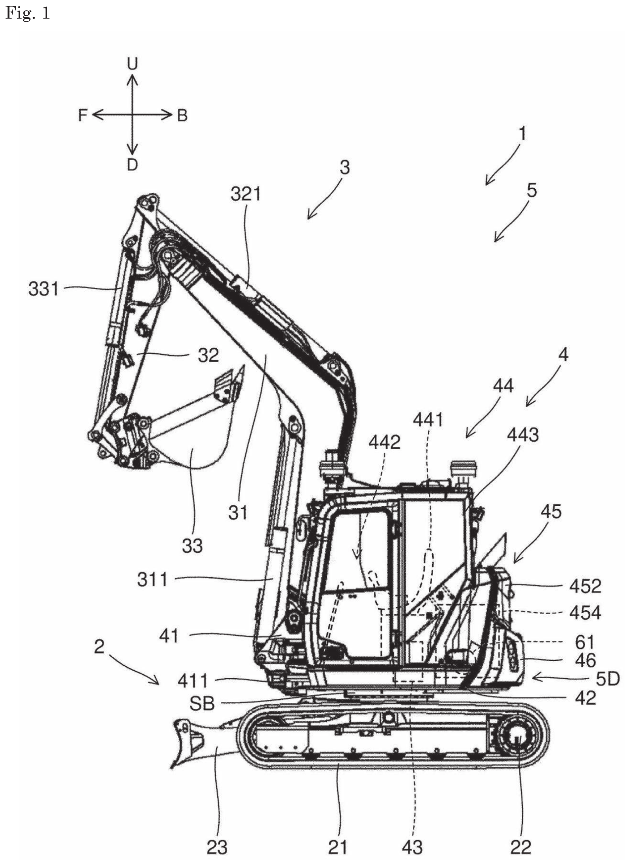

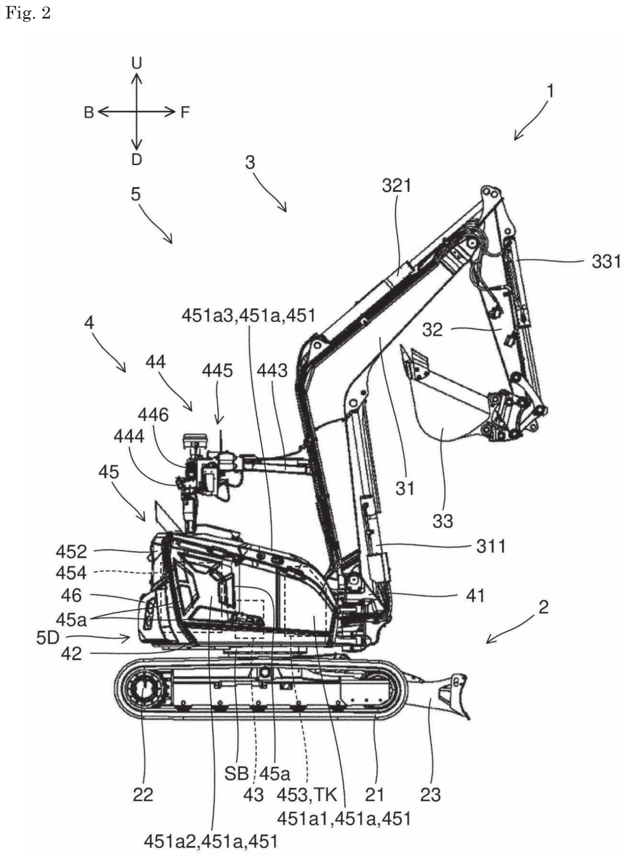

Figs. 1 and 2 are respectively a left side view and a right side view each showing a schematic configuration of a hydraulic excavator 1 which is an example of a work machine according to an embodiment of the present invention. In Fig. 1, for convenience, illustration of a fuel tank 453 to be described later is omitted. In Fig. 2, for convenience, illustration of a driver's seat 441 and the like to be described later is omitted. The hydraulic excavator 1 includes a support body 2, a work unit 3, and a turning body 4. In the present embodiment, the work unit 3 and the turning body 4 are collectively referred to as a machine body 5.

Here, directions in the present embodiment are defined as follows. A direction in which an operator (a driver or an operation person) sitting on the driver's seat 441 disposed in an operation section 44 of the turning body 4 faces the front side is defined as "front", and the direction opposite thereto is defined as "back". When the turning body 4 is in a non-turning state (the turning angle is 0 degrees) with respect to the support body 2, the front-back direction of the turning body 4 coincides with the front-back direction of the support body 2. The drawings show the hydraulic excavator 1 at a time when the turning body 4 is in the non-turning state with respect to the support body 2. In addition, a left side as viewed from the operator sitting on the driver's seat 441 is defined as "left", and a right side is defined as "right". Further, a gravity direction perpendicular to the front-back direction and the left-right direction is defined as an up-down direction, an upstream side in the gravity direction is defined as "upper", and a downstream side is defined as "lower" or "down". In the drawings, as necessary, the symbol "F" represents the front, "B" represents the back, "L" represents the left, "R" represents the right, "U" represents the upper side, and "D" represents the lower side or down side.

The support body 2 (also referred to as a lower travel body) includes a pair of left and right crawlers 21, a pair of left and right travel motors 22, and a blade 23. The left and right travel motors 22 respectively drive the left and right crawlers 21, whereby the hydraulic excavator 1 can be moved frontward (forward) and backward. The travel motor 22 includes a hydraulic motor. The blade 23 is provided at a front part side of the support body 2, and is used for ground leveling work, earth removal work, and the like. The blade 23 is rotated by a blade cylinder (not shown) including a hydraulic cylinder. A proximal end portion of the blade cylinder is connected to the blade 23.

The work unit 3 includes a boom 31, an arm 32, and a bucket 33. By independently driving the boom 31, the arm 32, and the bucket 33, excavation work for earth, sand, or the like can be performed.

The boom 31 includes a proximal end portion rotatably supported by a swing bracket 41 located at a front portion of the turning body 4, and is rotated in the up-down direction and the front-back direction by a boom cylinder 311. The boom cylinder 311 includes a proximal end portion supported by the swing bracket 41, and is telescopically movable.

The arm 32 includes a proximal end portion rotatably supported by a distal end portion of the boom 31, and is rotated by an arm cylinder 321. The arm cylinder 321 includes a proximal end portion supported by the boom 31, and is telescopically movable.

The bucket 33 includes a proximal end portion rotatably supported by a distal end portion of the arm 32, and is rotated by a bucket cylinder 331. The bucket cylinder 331 includes a proximal end portion supported by the arm 32, and is telescopically movable. The boom cylinder 311, the arm cylinder 321, and the bucket cylinder 331 include respective hydraulic cylinders.

The turning body 4 (also referred to as an upper turning body) is located on an upper side of the support body 2, and is provided to be able to turn with respect to the support body 2 via a turning bearing SB. That is, the support body 2 supports, in a turnable manner, the machine body 5 (particularly, the turning body 4). The turning body 4 includes the swing bracket 41, and further includes a turning frame 42, a turning motor 43, the operation section 44, an engine chamber 45, and a counterweight 46. That is, the hydraulic excavator 1 includes the swing bracket 41, the turning frame 42, the turning motor 43, the operation section 44, the engine chamber 45, and the counterweight 46.

The turning body 4 turns with respect to the support body 2 by driving of the turning motor 43 disposed on the turning frame 42. The turning motor 43 includes a hydraulic motor. That is, the turning motor 43 turns the machine body 5 (particularly, the turning body 4) with respect to the support body 2. The turning frame 42 is disposed in a bottom portion 5D of the machine body 5. A front end portion of the turning frame 42 supports the swing bracket 41 to allow the swing bracket 41 to be rotatable (swingable) in the left-right direction. The swing bracket 41 is rotated in the left-right direction by a swing cylinder 411 including a hydraulic cylinder. The swing cylinder 411 includes a proximal end portion supported by a left back portion of the turning body 4, and a distal end portion supported by a left side portion of the swing bracket 41. The swing cylinder 411 is telescopically movable. When the swing cylinder 411 extends and contracts, the swing bracket 41 rotates in the left-right direction with respect to the turning frame 42. As a result, the work unit 3 rotates in the left-right direction with respect to the turning body 4.

A back end portion of the turning frame 42 supports the counterweight 46. The counterweight 46 is a weight for maintaining excellent weight balance in the front-back direction of the hydraulic excavator 1 particularly during excavation work or the like. Note that the configuration of the turning frame 42 will be described later.

The operation section 44 (also referred to as a driving section) is provided in a left side portion of the turning body 4. The operation section 44 is provided to allow the operator to ride thereon and operate the support body 2 and the machine body 5. More specifically, the driver's seat 441 on which the operator sits is provided in the operation section 44. A plurality of operation members 442 is arranged around the driver's seat 441. The plurality of operation members 442 includes a lever, a switch, a pedal, and the like. When the plurality of operation members 442 is operated by the operator, one or more of the travel motor 22, the turning motor 43, the boom cylinder 311, the arm cylinder 321, the bucket cylinder 331, and the swing cylinder 411 are driven. Thus, it is possible to perform traveling of the support body 2, ground leveling work by using the blade 23, excavation work by using the work unit 3, turning of the turning body 4, or the like.

Note that the driver's seat 441 and the plurality of operation members 442 are covered by a cab 443. However, a configuration may be made in which, instead of the cab 443, a canopy covers the driver's seat 441 and the plurality of operation members 442. As an example, a light 444, a positioning antenna group 445, an indication lamp 446, and the like are attached to a right upper part side of a back portion of the cab 443.

The engine chamber 45 includes a right hood 451 and a back hood 452. The right hood 451 forms a right side wall of the engine chamber 45, and the back hood 452 forms a back wall of the engine chamber 45. The right hood 451 and the back hood 452 are provided to be openable and closable in the up-down direction.

The right hood 451 includes a plurality of hood members 451a. More specifically, the plurality of hood members 451a includes a first hood member 451a1, a second hood member 451a2, and a third hood member 451a3. The first hood member 451a1 is arranged on a right side portion of the turning body 4. The first hood member 451a1 is formed by bending a metal (or resin) plate-shaped member extending in the front-back direction, leftward as it extends toward the front. That is, the first hood member 451a1 is curved to bulge toward a right front side. The first hood member 451a1 covers a right side portion of the fuel tank 453 that is housed in the engine chamber 45 and that stores fuel. The fuel tank 453 is an example of a tank TK. That is, the hydraulic excavator 1 includes the tank TK (the fuel tank 453 in the present embodiment) and the hood member 451a (the first hood member 451a1 in the present embodiment) that covers a right part side, in the left-right direction, of the tank TK.

From a viewpoint of protecting the tank TK from, for example, earth, sand, or the like flying from the right in the left-right direction with respect to the tank TK, it is desirable to adopt the following configuration. That is, as in the present embodiment, the hydraulic excavator 1 desirably includes the hood member 451a (the first hood member 451a1 in the present embodiment) that covers the right part side, in the left-right direction, of the tank TK.

The second hood member 451a2 is arranged backward of the first hood member 451a1. Accordingly, the second hood member 451a2 is arranged on the right side portion of the turning body 4, similarly to the first hood member 451a1. The second hood member 451a2 is formed by bending a metal (or resin) plate-shaped member extending in the front-back direction, leftward as it extends toward the back. That is, the second hood member 451a2 is curved to bulge toward a right back side. The second hood member 451a2 is provided with intake ports 45a penetrating in the left-right direction.

The third hood member 451a3 is arranged on a left upper side of the first hood member 451a1 and the second hood member 451a2. The third hood member 451a3 is formed by bending a metal (or resin) plate-shaped member extending in the front-back direction, downward as it extends toward the front. That is, the third hood member 451a3 is curved to bulge toward a front upper side.

In addition to the fuel tank 453, an engine 454 and a plurality of hydraulic pumps 61 are housed in the engine chamber 45. The engine 454 is a drive source for the hydraulic excavator 1. That is, the hydraulic excavator 1 includes the engine 454 as a drive source and the plurality of hydraulic pumps 61.

The engine 454 includes a diesel engine, but is not limited thereto, and may include, for example, a gasoline engine. Since the engine 454 includes a diesel engine, the fuel tank 453 of the present embodiment stores light oil as the fuel described above. However, the fuel is not limited to light oil. The fuel may be, for example, gasoline, in a case where the engine 454 includes a gasoline engine. Note that the drive source for the hydraulic excavator 1 is not limited to the engine 454, and may be, for example, an electric motor driven with electric power. A hydraulic system of the hydraulic excavator 1 including the plurality of hydraulic pumps 61 will be described below.

### [2. Configurations of hydraulic system of work machine]

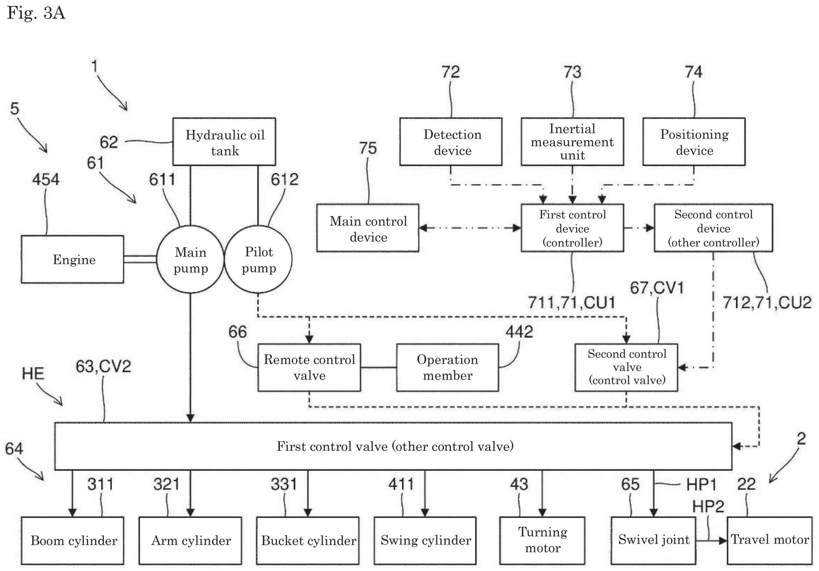

Fig. 3A is a block diagram schematically showing a configuration of a hydraulic system of the hydraulic excavator 1. The plurality of hydraulic pumps 61 includes a main pump 611 and a pilot pump 612. The main pump 611 includes a variable displacement pump, but is not limited thereto, and may include a fixed displacement pump, for example. The main pump 611 is connected to a rotation shaft (output shaft) of the engine 454. When the rotation shaft of the engine 454 rotates, the main pump 611 is driven.

The pilot pump 612 includes a fixed displacement pump, but is not limited thereto, and may include a variable displacement pump. Similarly to the main pump 611, the pilot pump 612 is connected to the rotation shaft of the engine 454. Therefore, when the rotation shaft of the engine 454 rotates, the pilot pump 612 is driven. That is, the plurality of hydraulic pumps 61 is driven by the drive source (the engine 454 in the present embodiment). Each of the main pump 611 and the pilot pump 612 is connected to a hydraulic oil tank 62 that stores hydraulic oil.

Note that although the one main pump 611 and the one pilot pump 612 are shown in Fig. 3A as an example, two or more main pumps 611 and two or more pilot pumps 612 may be provided. In addition, the number of main pumps 611 and the number of pilot pumps 612 may be different from each other. For example, two main pumps 611 may be provided and simultaneously one pilot pump 612 may be provided.

Each of the main pump 611 and the pilot pump 612 is connected to the hydraulic oil tank 62 that stores the hydraulic oil. Note that the hydraulic oil tank 62 may form the tank TK (see Fig. 2), together with the fuel tank 453 (see Fig. 2) or instead of the fuel tank 453. That is, the tank TK is simply required to be a single container or a plurality of containers that stores a storage content (for example, fuel, hydraulic oil, or the like).

When the main pump 611 is driven by the engine 454, the hydraulic oil in the hydraulic oil tank 62 is supplied to a hydraulic actuator 64 via a first control valve 63 arranged inside the turning body 4. The arrangement position of the first control valve 63 will be described later. In the present embodiment, the hydraulic actuator 64 means a collection of hydraulic motors (for example, the travel motor 22 and the turning motor 43) and hydraulic cylinders (for example, the boom cylinder 311 and the swing cylinder 411), driven by hydraulic oil. Therefore, the hydraulic actuator 64 includes a hydraulic motor and a hydraulic cylinder. That is, the hydraulic excavator 1 includes the hydraulic actuator 64, and the hydraulic actuator 64 is driven by hydraulic oil discharged from the hydraulic pump 61 (the main pump 611 in the present embodiment).

Note that the first control valve 63 is provided for the components other than the travel motor 22 in the hydraulic actuator 64 and the components other than the travel motor 22 in the hydraulic actuator 64 are arranged in the machine body 5 that turns with respect to the support body 2, and the travel motor 22 is arranged in the support body 2, as described above. Therefore, the travel motor 22 is connected to the first control valve 63 via a swivel joint 65. The swivel joint 65 allows hydraulic oil to flow between a first oil passage HP1 provided in the machine body 5 and a second oil passage HP2 provided in the support body 2. Therefore, the hydraulic excavator 1 includes the swivel joint 65, and the swivel joint 65 allows the first oil passage HP1 of the machine body 5 and the second oil passage HP2 of the support body 2 to communicate with each other. In addition, with the swivel joint 65, entanglement of hydraulic hoses and the like forming the first oil passage HP1 and the second oil passage HP2 is avoided when the machine body 5 turns with respect to the support body 2.

The first control valve 63 is a direction switch valve that controls a flow direction and a flow rate of the hydraulic oil supplied from the main pump 611 to the hydraulic actuator 64. The control described above through the first control valve 63 is performed on the basis of hydraulic oil (also referred to as pilot oil) supplied from the pilot pump 612 to the first control valve 63. The supply of the pilot oil from the pilot pump 612 to the first control valve 63 is performed via either a remote control valve 66 or a second control valve 67. Therefore, each of the remote control valve 66 and the second control valve 67 controls the first control valve 63.

The remote control valve 66 (also referred to as a pilot valve) is provided to correspond to each of the devices (for example, the travel motor 22, the boom cylinder 311, and the like) forming the hydraulic actuator 64. That is, a plurality of remote control valves 66 is provided.

The remote control valves 66 are connected to the operation members 442. When the operator operates the operation member 442 (for example, an operation lever), the remote control valve 66 is operated, and pilot oil is supplied to the first control valve 63. On the basis of this pilot oil, the first control valve 63 controls, for example, a flow direction and a flow rate of hydraulic oil supplied to the turning motor 43. As a result, the machine body 5 (particularly, the turning body 4) turns with respect to the support body 2. As another example, the first control valve 63 controls a flow direction and a flow rate of hydraulic oil supplied to the boom cylinder 311, whereby the boom 31 is driven. Therefore, the first control valve 63 controls the operation of the machine body 5. With such a configuration, the hydraulic excavator 1 of the present embodiment is configured to be operable with manual operation.

The second control valve 67 is configured to integrally include a plurality of electromagnetic proportional valves corresponding to respective devices (for example, the travel motor 22, the boom cylinder 311, and the like) forming the hydraulic actuator 64. At least some of the plurality of electromagnetic proportional valves described above may be a simple electromagnetic valve. Therefore, unlike the remote control valves 66, the number of second control valves 67 is one. However, the second control valve 67 is not limited to the above configuration. For example, a configuration may be made in which the second control valve 67 includes a single electromagnetic proportional valve, and in which a plurality of the second control valves 67 is provided.

The electromagnetic proportional valves, described above, included in the second control valve 67 are driven on the basis of a drive command output from an automatic operation control device 71. With such a configuration, the hydraulic excavator 1 of the present embodiment is configured to be operable with automatic operation while being configured to be operable with manual operation. Here, the automatic operation means an operation mode in which the hydraulic excavator 1 is operated, for example, excavation operation through the work unit 3 (see Fig. 1 and the like) is performed, even without operation through the operator. More specifically, the automatic operation control device 71 includes a first control device 711 and a second control device 712. The first control device 711 and the second control device 712 each include an electronic control unit also referred to as an ECU. The first control device 711 and the second control device 712 are electrically connected to each other. Note that the first control device 711 and the second control device 712 are provided separately, but the configuration is not limited thereto, and the first control device 711 and the second control device 712 may be provided integrally, for example. The first control device 711 is connected to a detection device 72, inertial measurement units 73, and a positioning device 74, and performs communication with a main control device 75.

Each of the detection device 72 and the inertial measurement unit 73 detects information on the work unit 3, and outputs the detected information to the first control device 711. Specifically, the detection device 72 is a device that is attached to the vicinity of the front end portion of the turning frame 42 (see Fig. 1 and the like) and that can measure the attitude of the work unit 3 in the left-right direction with respect to the turning body 4. The detection device 72 includes, for example, a limit switch. However, the detection device 72 is not limited to the configuration including a limit switch, and may include, for example, an angle sensor.

The inertial measurement unit 73 is a device that includes a three-axis angular velocity sensor and a three-direction acceleration sensor and that can measure the attitude of the work unit 3. The inertial measurement units 73 are attached to the boom 31, the arm 32, and the bucket 33 (see Fig. 1 and the like), and measure respective attitudes (rotation angles) of the boom 31, the arm 32, and the bucket 33 in the up-down direction and the front-back direction. Note that an angle sensor may be used instead of or in addition to the inertial measurement unit 73, in order to measure each of the attitudes of the boom 31, the arm 32, and the bucket 33.

The positioning device 74 includes the positioning antenna group 445 (see Fig. 2), and acquires the position of the hydraulic excavator 1 as, for example, latitude and longitude information by using a positioning signal received by the positioning antenna group 445 from a positioning satellite. The positioning device 74 receives, for example, a positioning signal from a reference station (not shown) by using an appropriate method, and then measures the position using a known real time kinematic GNSS (RTK-GNSS) method. The positioning device 74 outputs position information on the hydraulic excavator 1 to the first control device 711. Note that the positioning device 74 may measure the position by using another method such as a differential GNSS (DGNSS) method. Alternatively, the measurement of the position of the hydraulic excavator 1 may be performed by installing a total station outside the hydraulic excavator 1 and by using a prism, a light receiver, or the like corresponding to the total station.

Similarly to the automatic operation control device 71, the main control device 75 includes an electronic control unit also referred to as an ECU. Specifically, the main control device 75 includes a plurality of electronic control units that can communicate with each other, but is not limited thereto, and may include, for example, a single electronic control unit. The main control device 75 performs control on the hydraulic excavator 1 other than the control related to the automatic operation, for example. As an example, the main control device 75 controls a rotation speed of the engine 454, or controls a discharge amount of the main pump 611. In addition to the control described above, the main control device 75 performs communication with the first control device 711, and transmits, to the first control device 711, information, regarding the hydraulic excavator 1 (that is, the support body 2 and the machine body 5), that the main control device 75 has.

The first control device 711 receives provision of construction data from a construction data (design data) storage server via a communication line such as the Internet. However, the acquisition of the construction data in the first control device 711 is not limited to the above method, and for example, the first control device 711 may store the construction data in advance.

The first control device 711 calculates a drive command for the second control valve 67, on the basis of various types of information acquired from the detection device 72, the inertial measurement unit 73, the positioning device 74, and the main control device 75, and the construction data described above, and outputs the drive command to the second control device 712. The second control device 712 controls the second control valve 67, on the basis of the drive command output from the first control device 711. Thus, the second control valve 67 is driven, and the first control valve 63 is controlled in accordance with the driving of the second control valve 67. As a result, the operation of the hydraulic excavator 1 (for example, excavation operation through the work unit 3) is automatically performed. Therefore, the automatic operation control device 71 (the first control device 711 and the second control device 712) controls the hydraulic excavator 1 on the basis of attitude information on the machine body 5 (in particular, the work unit 3) and the position information on the hydraulic excavator 1, and the construction data.

In the present embodiment, the second control valve 67 is also referred to as a control valve CV1, and the first control valve 63 is also referred to as another control valve CV2. That is, the hydraulic excavator 1 includes the control valve CV1 (the second control valve 67 in the present embodiment) and the other control valve CV2 (the first control valve 63 in the present embodiment). In addition, the control valve CV1 controls the other control valve CV2, and the other control valve CV2 controls the flow direction and the flow rate of the hydraulic oil supplied from the hydraulic pump 61 (the main pump 611 in the present embodiment) to the hydraulic actuator 64.

As described above, in the present embodiment, the second control valve 67 is also referred to as the control valve CV1, and the first control valve 63 is also referred to as the other control valve CV2. In addition, the first control valve 63 forms hydraulic equipment HE. The hydraulic equipment HE may include the remote control valve 66 or the like, in addition to the first control valve 63. However, the hydraulic equipment HE is configured excluding the second control valve 67. Therefore, the hydraulic excavator 1 includes the hydraulic equipment HE (the first control valve 63 in the present embodiment) that controls the operation of the machine body 5, and the control valve CV1 (the second control valve 67 in the present embodiment) that controls the hydraulic equipment HE. In addition, the hydraulic equipment HE includes the other control valve (the first control valve 63 in the present embodiment) that controls the flow direction and the flow rate of the hydraulic oil supplied from the hydraulic pump 61 (the main pump 611 in the present embodiment) to the hydraulic actuator 64.

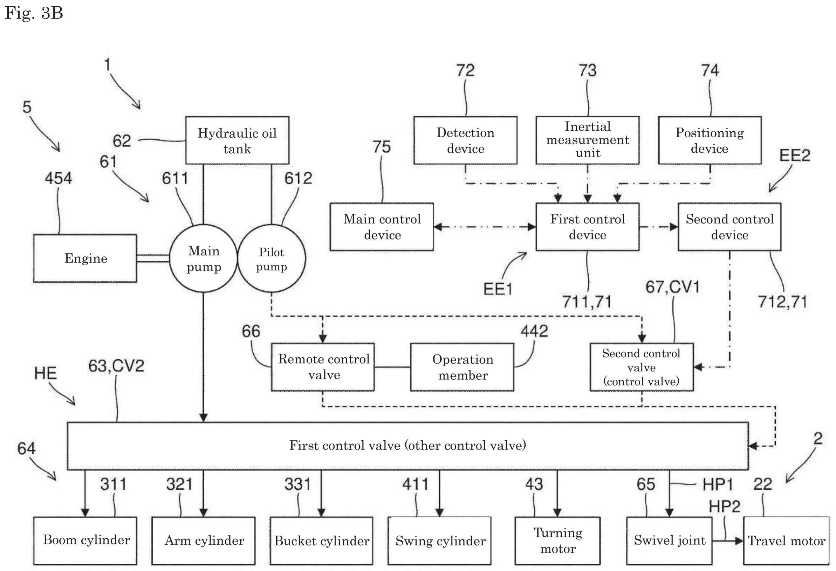

Further, as shown in Fig. 3B, the first control device 711 may form electrical/electronic equipment EE1, and the second control device 712 may form other electrical/electronic equipment EE2. That is, the hydraulic excavator 1 includes the electrical/electronic equipment EE1 (the first control device 711 in the present embodiment) and the other electrical/electronic equipment EE2 (the second control device 712 in the present embodiment). In addition, the other electrical/electronic equipment EE2 is controlled by the electrical/electronic equipment EE1, and controls the control valve CV1 (the second control valve 67 in the present embodiment).

The electrical/electronic equipment EE1 may include various electrical components such as a relay and the like, in addition to the first control device 711. The other electrical/electronic equipment EE2 may include the electrical components described above, in addition to the second control device 712.

From a viewpoint of easily achieving the hydraulic excavator 1 that is operable with the automatic operation in a configuration in which the hydraulic excavator 1 includes the control valve CV1 and the other control valve CV2 that controls the flow direction and the flow rate of the hydraulic oil supplied from the hydraulic pump 61 to the hydraulic actuator 64, it is desirable to adopt the following configuration. That is, as in the present embodiment, the control valve CV1 desirably controls the other control valve CV2.

Note that the first control valve 63 forms the hydraulic equipment HE. The hydraulic equipment HE may include the remote control valve 66 or the like, in addition to the first control valve 63. However, the hydraulic equipment HE is configured excluding the second control valve 67.

In addition, in the present embodiment, the first control device 711 is also referred to as a controller CU1, and the second control device 712 is also referred to as another controller CU2. That is, the hydraulic excavator 1 includes the controller CU1 (the first control device 711 in the present embodiment). In addition, the hydraulic excavator 1 includes the other controller CU2 (the second control device 712 in the present embodiment), and the other controller CU2 is controlled by the controller CU1, and controls the control valve CV1 (the second control valve 67 in the present embodiment).

### [3. Configurations of turning frame]

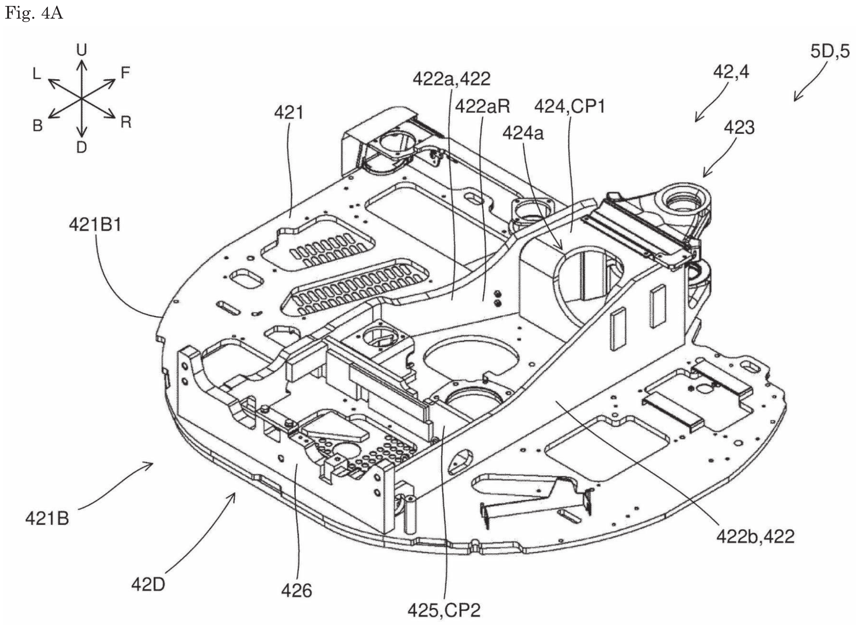

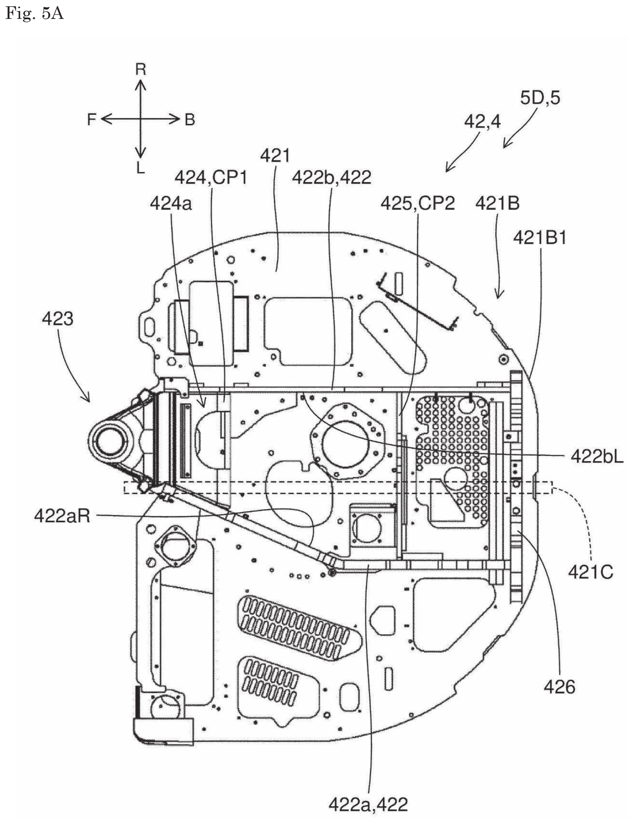

A configuration of the turning frame 42 will be described with reference to Figs. 4A and 5A. Figs. 4A and 5A are, respectively, a perspective view as viewed from a right back side and a plan view, each showing a configuration of the turning frame 42. The turning frame 42 includes a base plate 421, a pair of vertical plates 422, a swing support portion 423, a first connection plate 424, a second connection plate 425, and a counterweight mounting plate 426. That is, the hydraulic excavator 1 includes the base plate 421, the pair of vertical plates 422, the swing support portion 423, the first connection plate 424, the second connection plate 425, and the counterweight mounting plate 426. Note that in the present embodiment, the first connection plate 424 is also referred to as a connection plate CP1, and the second connection plate 425 is also referred to as another connection plate CP2. That is, the hydraulic excavator 1 includes the connection plate CP1 (the first connection plate 424 in the present embodiment) and the other connection plate CP2 (the second connection plate 425 in the present embodiment).

The base plate 421 is formed of a metal plate-shaped member extending in the front-back direction and the left-right direction. More specifically, an outer peripheral edge 421B1 of a back portion 421B of the base plate 421 is formed such that the width thereof in the left-right direction increases from the back toward the front.
Specifically, the outer peripheral edge 421B1 is formed in an arc shape. However, the shape of the base plate 421 is not limited to the above shape, and may be, for example, a circular shape, an elliptical shape, a rectangular shape, a square shape, or a polygonal shape other than the rectangular shape and the square shape when the base plate 421 is viewed from an upper side.

The base plate 421 is disposed in a bottom portion 42D of the turning frame 42. As described above, the turning frame 42 itself is disposed in the bottom portion 5D of the machine body 5 (see also Figs. 1 and 2). Therefore, the base plate 421 is located in the bottom portion 5D of the machine body 5.

Each of the pair of vertical plates 422 is formed of a metal plate-shaped member extending in the front-back direction and the up-down direction. The pair of vertical plates 422 are disposed upright on the base plate 421, while being perpendicular to the base plate 421. In particular, the pair of vertical plates 422 are disposed to extend substantially completely from a front end portion to a back end portion of the base plate 421. That is, the pair of vertical plates 422 are disposed to extend in the front-back direction of the machine body 5, on the base plate 421. More specifically, one vertical plate 422a of the pair of vertical plates 422 is arranged on a left part side of the base plate 421, and another vertical plate 422b of the pair of vertical plates 422 is arranged on a right part side of the base plate 421. Specifically, the one vertical plate 422a is located leftward relative to a middle portion 421C of the base plate 421 in the left-right direction, and the other vertical plate 422b is located rightward relative to the middle portion 421C. Note that in the present embodiment, a front end portion of the one vertical plate 422a and the middle portion 421C of the base plate 421 slightly overlap each other in plan view, but the configuration is not limited thereto, and the entire one vertical plate 422a may be located leftward relative to the middle portion 421C.

The one vertical plate 422a includes a back portion located to extend straight in the front-back direction, and a front portion located to extend in a direction in which a front part side thereof is inclined rightward with respect to the front-back direction. However, the configuration of the one vertical plate 422a is not limited to the above configuration. For example, a configuration may be made in which the entire one vertical plate 422a extends straight in the front-back direction. The other vertical plate 422b is located to extend straight in the front-back direction. However, the configuration of the other vertical plate 422b is not limited to the above configuration. For example, a configuration may be made in which the other vertical plate 422b is partially bent. In particular, a right side surface 422aR of the one vertical plate 422a and a left side surface 422bL of the other vertical plate 422b are located to face each other.

Respective front ends of the vertical plates 422 are connected to the swing support portion 423. The swing support portion 423 is disposed in the front end portion of the turning frame 42, and supports the swing bracket 41 (see Figs. 1 and 2) to allow the swing bracket 41 to be rotatable in the left-right direction.

The first connection plate 424 is formed by bending, frontward, an upper end portion of a metal plate-shaped member extending in the left-right direction and the up-down direction. The bent upper end portion is connected to a back end portion of the swing support portion 423. Therefore, the first connection plate 424 is located adjacent to the swing support portion 423 on the back of the swing support portion 423. In addition, a lower end portion of the first connection plate 424 is connected to an upper surface at a front part side of the base plate 421. Further, a left end portion of the first connection plate 424 is connected to the front portion of the one vertical plate 422a, and a right end portion of the first connection plate 424 is connected to a front portion of the other vertical plate 422b. Therefore, the connection plate CP1 (the first connection plate 424 in the present embodiment) is disposed at the front part side of the base plate 421, and connects the pair of vertical plates 422. Note that the first connection plate 424 is provided with an opening 424a penetrating in a direction in which a front part side is inclined downward with respect to the front-back direction.

The second connection plate 425 is formed of a metal plate-shaped member extending in the left-right direction. The second connection plate 425 is disposed backward of the first connection plate 424. A lower end portion of the second connection plate 425 is connected to an upper surface at a back part side of the base plate 421. A left end portion of the second connection plate 425 is connected to the back portion of the one vertical plate 422a, and a right end portion of the second connection plate 425 is connected to a back portion of the other vertical plate 422b. Therefore, the other connection plate CP2 (the second connection plate 425 in the present embodiment) is disposed at the back part side of the base plate 421, and connects the pair of vertical plates 422.

The counterweight mounting plate 426 is provided for mounting the counterweight 46 (see Figs. 1 and 2). The counterweight mounting plate 426 is formed of a metal plate-shaped member extending in the left-right direction. The counterweight mounting plate 426 is disposed backward of the second connection plate 425. Specifically, the counterweight mounting plate 426 is disposed upright on the back end portion of the base plate 421, while being perpendicular to the base plate 421.

On the turning frame 42, the operation section 44, the fuel tank 453 (for these, see Fig. 2), the hydraulic oil tank 62, the first control valve 63, the second control valve 67, the first control device 711, the second control device 712 (for these, see Figs. 3A and 3B), and the like are arranged. These equipment and devices are fixed to the turning frame 42 by using appropriate fixing members (stays or the like) as necessary. Arrangement configurations of these equipment and devices will be described below.

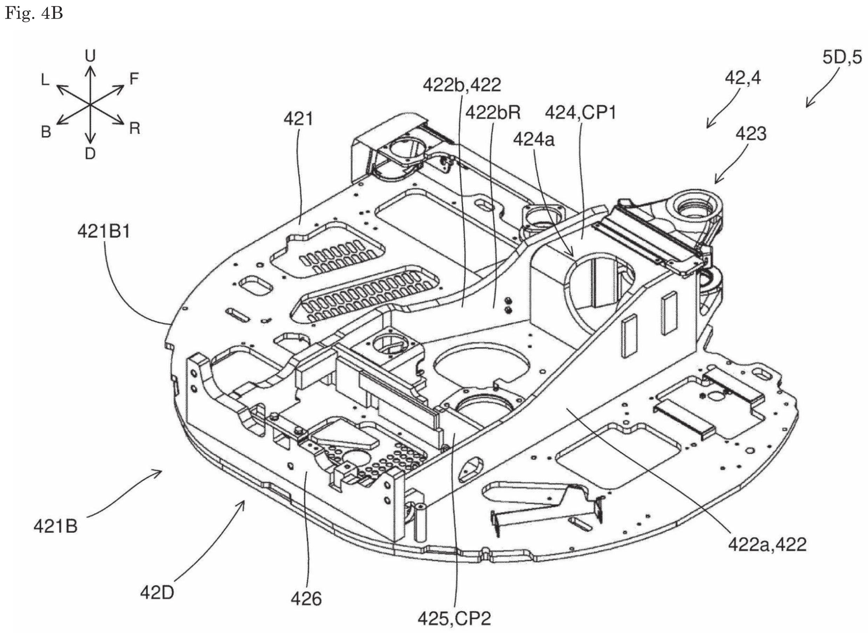

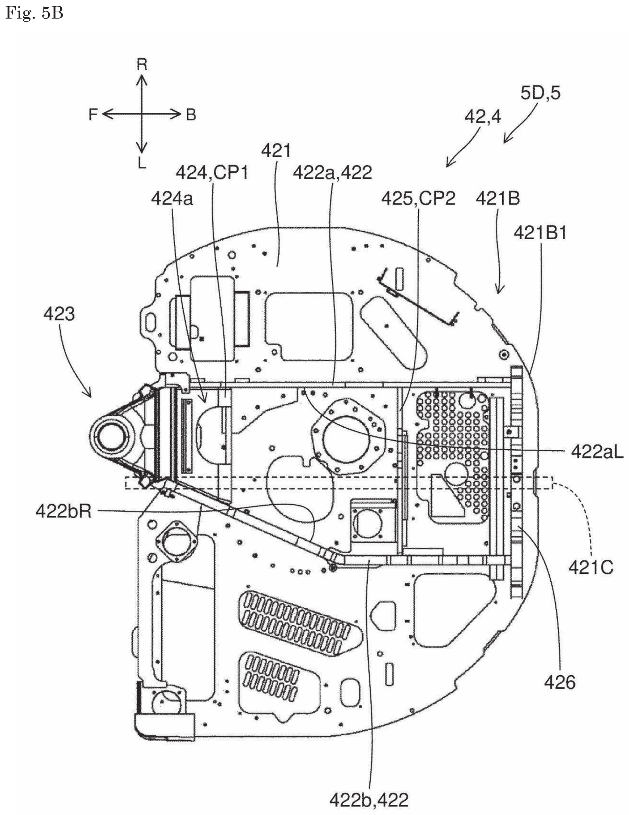

In addition, in the example shown in Figs. 4B and 5B, each of the pair of vertical plates 422 is formed of a metal plate-shaped member extending in the front-back direction and the up-down direction. The pair of vertical plates 422 are disposed upright on the base plate 421, while being perpendicular to the base plate 421. In particular, the pair of vertical plates 422 are disposed to extend substantially completely from the front end portion to the back end portion of the base plate 421. That is, the pair of vertical plates 422 are disposed to extend in the front-back direction of the machine body 5, on the base plate 421. More specifically, the one vertical plate 422a of the pair of vertical plates 422 is arranged on the right part side of the base plate 421, and the other vertical plate 422b of the pair of vertical plates 422 is arranged on the left part side of the base plate 421. Specifically, the one vertical plate 422a is located rightward relative to the middle portion 421C of the base plate 421 in the left-right direction, and the other vertical plate 422b is located leftward relative to the middle portion 421C. That is, the one vertical plate 422a is arranged rightward, in the left-right direction of the machine body 5, with respect to the middle portion 421C of the base plate 421 in the left-right direction. In addition, the other vertical plate 422b is arranged leftward in the left-right direction with respect to the middle portion 421C of the base plate 421.

Note that in this example, a front end portion of the other vertical plate 422b and the middle portion 421C of the base plate 421 slightly overlap each other in plan view, but the configuration is not limited thereto, and the entire other vertical plate 422b may be located leftward relative to the middle portion 421C.

The one vertical plate 422a is located to extend straight in the front-back direction. However, the configuration of the one vertical plate 422a is not limited to the above configuration. For example, a configuration may be made in which the one vertical plate 422a is partially bent. The other vertical plate 422b includes a back portion located to extend straight in the front-back direction, and a front portion located to extend in a direction in which a front part side thereof is inclined rightward with respect to the front-back direction. However, the configuration of the other vertical plate 422b is not limited to the above configuration. For example, a configuration may be made in which the entire other vertical plate 422b extends straight in the front-back direction. In particular, a left side surface 422aL of the one vertical plate 422a and a right side surface 422bR of the other vertical plate 422b are located to face each other.

Each of the pair of vertical plates 422 is formed of a metal plate-shaped member extending in the front-back direction and the up-down direction. The pair of vertical plates 422 are disposed upright on the base plate 421, while being perpendicular to the base plate 421. In particular, the pair of vertical plates 422 are disposed to extend substantially completely from the front end portion to the back end portion of the base plate 421. That is, the pair of vertical plates 422 are disposed to extend in the front-back direction of the machine body 5, on the base plate 421. More specifically, the one vertical plate 422a of the pair of vertical plates 422 is arranged on the right part side of the base plate 421, and the other vertical plate 422b of the pair of vertical plates 422 is arranged on the left part side of the base plate 421. Specifically, the one vertical plate 422a is located rightward relative to the middle portion 421C of the base plate 421 in the left-right direction, and the other vertical plate 422b is located leftward relative to the middle portion 421C. That is, the one vertical plate 422a is arranged rightward, in the left-right direction of the machine body 5, with respect to the middle portion 421C of the base plate 421 in the left-right direction. In addition, the other vertical plate 422b is arranged leftward in the left-right direction with respect to the middle portion 421C of the base plate 421.

Note that in this example, a front end portion of the other vertical plate 422b and the middle portion 421C of the base plate 421 slightly overlap each other in plan view, but the configuration is not limited thereto, and the entire other vertical plate 422b may be located leftward relative to the middle portion 421C.

The one vertical plate 422a is located to extend straight in the front-back direction. However, the configuration of the one vertical plate 422a is not limited to the above configuration. For example, a configuration may be made in which the one vertical plate 422a is partially bent. In the other vertical plate 422b, the back portion thereof is located to extend straight in the front-back direction, and the front portion thereof is located to extend in the direction in which the front part side thereof is inclined rightward with respect to the front-back direction. However, the configuration of the other vertical plate 422b is not limited to the above configuration. For example, a configuration may be made in which the entire other vertical plate 422b extends straight in the front-back direction. In particular, the left side surface 422aL of the one vertical plate 422a and the right side surface 422bR of the other vertical plate 422b are located to face each other.

In addition, in this example, the first connection plate 424 is formed by bending, frontward, an upper end portion of a metal plate-shaped member extending in the left-right direction and the up-down direction. The bent upper end portion is connected to the back end portion of the swing support portion 423. Therefore, the first connection plate 424 is located adjacent to the swing support portion 423 on the back of the swing support portion 423. In addition, the lower end portion of the first connection plate 424 is connected to the upper surface at the front part side of the base plate 421. Further, the right end portion of the first connection plate 424 is connected to a front portion of the one vertical plate 422a, and the left end portion of the first connection plate 424 is connected to the front portion of the other vertical plate 422b. Therefore, the connection plate CP1 (the first connection plate 424 in the present embodiment) is disposed at the front part side of the base plate 421, and connects the pair of vertical plates 422. Note that the first connection plate 424 is provided with the opening 424a penetrating in the direction in which the front part side is inclined downward with respect to the front-back direction.

The second connection plate 425 is formed of a metal plate-shaped member extending in the left-right direction. The second connection plate 425 is disposed backward of the first connection plate 424. The lower end portion of the second connection plate 425 is connected to the upper surface at the back part side of the base plate 421. The right end portion of the second connection plate 425 is connected to a back portion of the one vertical plate 422a, and the left end portion of the second connection plate 425 is connected to the back portion of the other vertical plate 422b. Therefore, the other connection plate CP2 (the second connection plate 425 in the present embodiment) is disposed at the back part side of the base plate 421, and connects the pair of vertical plates 422.

### [4-1. Arrangement configuration of controller and the like]

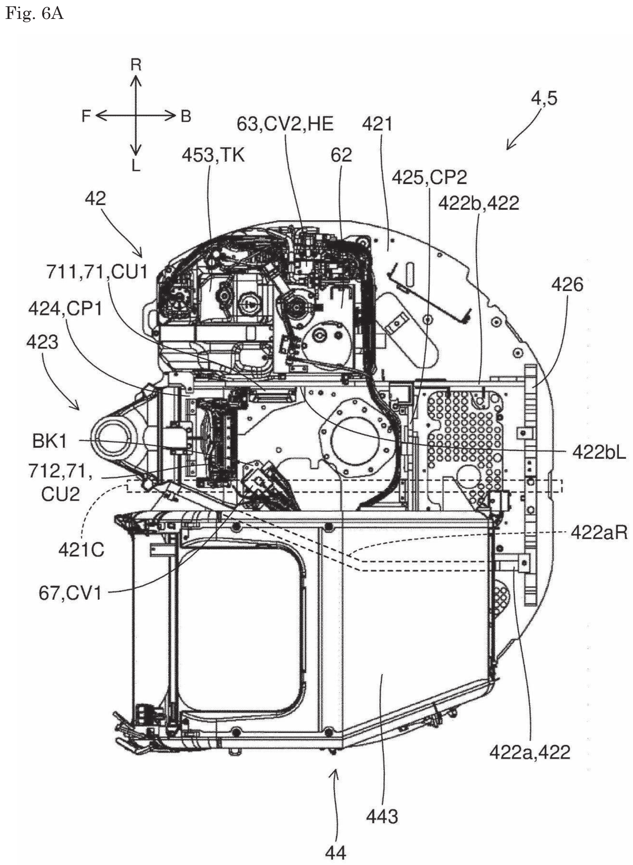

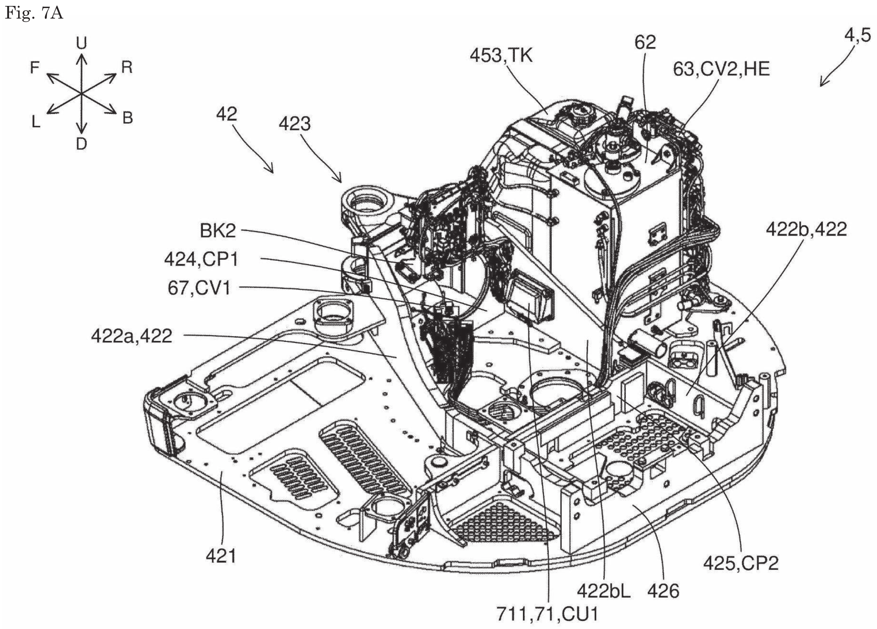

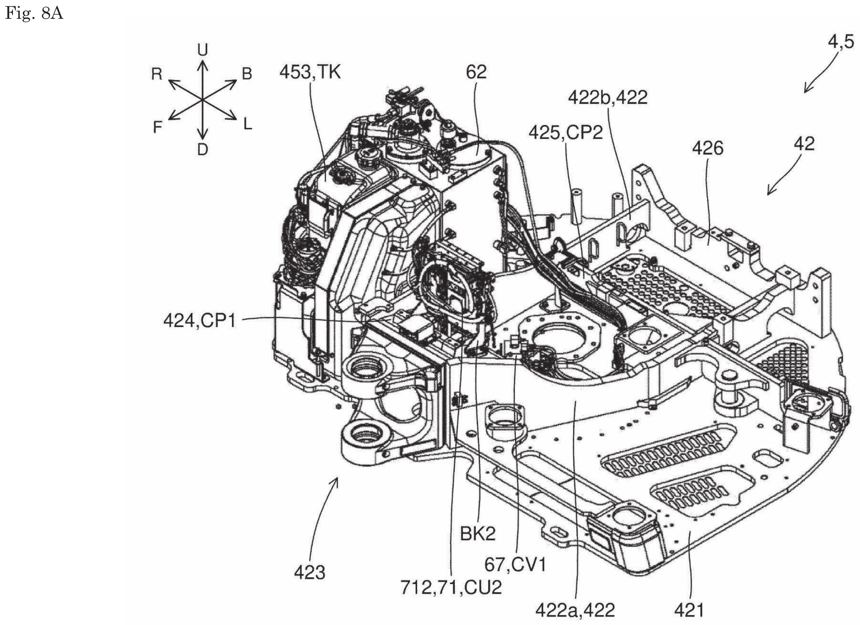

Figs. 6A, 7A, and 8A are, respectively, a plan view, a perspective view from a left back side, and a perspective view from a left front side, the views showing an arrangement configuration of the operation section 44, the first control device 711, and the like. In each of Figs. 7A and 8A, for convenience, illustration of the operation section 44 is omitted.

The operation section 44 is arranged on a left side portion of the turning frame 42. More specifically, the operation section 44 is arranged leftward relative to the middle portion 421C of the base plate 421 in the left-right direction. That is, the operation section 44 is arranged leftward in the left-right direction with respect to the middle portion 421C of the base plate 421 in the left-right direction. In addition, the operation section 44 is located to overlap a part of the one vertical plate 422a in plan view. However, the operation section 44 may be configured to overlap the entire one vertical plate 422a in plan view. That is, the operation section 44 is arranged to overlap at least a part of the one vertical plate 422a of the pair of vertical plates 422 in plan view.

On the other hand, the operation section 44 is located without overlapping the first control device 711 in plan view. Specifically, the operation section 44 and the first control device 711 are located in a manner to be shifted from each other in the left-right direction. In particular, the first control device 711 is located rightward relative to the operation section 44. That is, the controller CU1 (the first control device 711 in the present embodiment) is arranged to be shifted rightward in the left-right direction with respect to the operation section 44 in plan view. More specifically, the first control device 711 is fixed to a front part side of the left side surface 422bL of the other vertical plate 422b with a fastening member (not shown) such as a bolt. That is, the controller CU1 (the first control device 711 in the present embodiment) is attached to the other vertical plate 422b of the pair of vertical plates 422. However, the controller CU1 may be attached to the one vertical plate 422a. That is, the controller CU1 is attached to any one of the pair of vertical plates 422.

From viewpoints of firmly attaching the controller CU1 and improving flexibility in an arrangement layout of the controller CU1, it is desirable to attach the controller CU1 to any one of the pair of vertical plates 422, as in the present embodiment.

As described above, regarding the other vertical plate 422b, the left side surface 422bL is located to face the right side surface 422aR of the one vertical plate 422a. Therefore, the first control device 711 fixed to the left side surface 422bL of the other vertical plate 422b is located leftward of the other vertical plate 422b and rightward of the one vertical plate 422a. That is, the controller CU1 (the first control device 711 in the present embodiment) is arranged between the pair of vertical plates 422 (between the one vertical plate 422a and the other vertical plate 422b in the left-right direction). Note that a space between the pair of vertical plates 422 is located backward of the work unit 3, and thus this space is less likely to be used as an arrangement space for equipment and devices, for the purpose of avoidance of interference with the work unit 3, protection from earth, sand, or the like falling from the work unit 3, or the like. That is, the space between the pair of vertical plates 422 is a dead space.

According to the above configuration, the dead space between the pair of vertical plates 422 can be effectively used, and thus the controller CU1 can be efficiently arranged. In addition, since the pair of vertical plates 422 extend in the front-back direction, when access is made to the controller CU1 from the front or the back of the space between the pair of vertical plates 422, the access to the controller CU1 can be made without being obstructed by the pair of vertical plates 422. Therefore, by allowing access from the front or back of the space between the pair of vertical plates 422, a connection member such as a cable to be connected to the controller CU1 can be easily connected to the controller CU1, and the connection work to the controller CU1 can be facilitated. Thus, the connection work to the controller CU1 can be facilitated, while the controller CU1 can be efficiently arranged. Note that in a case where the heights of the pair of vertical plates 422 are relatively low, even when access to the controller CU1 is made from the left or the right of the pair of vertical plates 422, the access to the controller CU1 is less likely to be obstructed by the pair of vertical plates 422. Therefore, by making the heights of the pair of vertical plates 422 relatively low, it is possible to reliably achieve facilitation of the connection work to the controller CU1.

In a configuration in which the hydraulic excavator 1 includes the operation section 44 on which the operator rides to operate the machine body 5, it is desirable to improve accessibility to (ease of getting on and out of) the operation section 44 through the left side in the left-right direction, with respect to the machine body 5. However, for example, in a case where the operation section 44 is arranged to be shifted leftward in the left-right direction with respect to the one vertical plate 422a (located leftward on the base plate 421 in the left-right direction) in plan view, there is a risk that an amount of protrusion of the operation section 44 from the base plate 421 increases. In order to downsize the machine body 5, it is desirable to suppress the increase in the amount of protrusion described above. From such a viewpoint, as in the present embodiment, the operation section 44 is desirably arranged to overlap at least a part of the one vertical plate 422a in plan view, on the left side, in the left-right direction of the machine body 5, with respect to the middle portion 421C of the base plate 421 in the left-right direction.

In a case where the controller CU1 (the first control device 711 in the present embodiment) is arranged leftward in the left-right direction with respect to the operation section 44 located leftward in the left-right direction relative to the middle portion 421C, it is difficult to arrange the controller CU1 between the pair of vertical plates 422. In addition, in a case where the controller CU1 is arranged to overlap the operation section 44 in plan view, the operation section 44 obstructs access to the controller CU1 from an upper side (or a lower side) relative to the controller CU1. Therefore, from viewpoints of easily achieving the configuration in which the controller CU1 is arranged between the pair of vertical plates 422 and avoiding a situation in which the access to the controller CU1 described above is obstructed by the operation section 44, it is desirable to adopt the following configuration. That is, as in the present embodiment, the controller CU1 is desirably arranged to be shifted rightward in the left-right direction with respect to the operation section 44 in plan view.

From viewpoints of firmly attaching the controller CU1 and easily avoiding a situation in which access to the controller CU1 from an upper side (or a lower side) relative to the controller CU1 is obstructed by the operation section 44, it is desirable to adopt the following configuration. That is, as in the present embodiment, the controller CU1 is desirably attached to the other vertical plate 422b of the pair of vertical plates 422.

The fuel tank 453 is located rightward of the other vertical plate 422b. As described above, the other vertical plate 422b is located rightward relative to the middle portion 421C of the base plate 421 in the left-right direction. Therefore, the tank TK (the fuel tank 453 in the present embodiment) is arranged rightward in the left-right direction with respect to the middle portion 421C of the base plate 421 in the left-right direction. More specifically, the fuel tank 453 and the other vertical plate 422b are arranged side by side in the left-right direction. That is, the other vertical plate 422b is arranged to be shifted leftward in the left-right direction with respect to the tank TK in plan view.

Desirably, the other vertical plate 422b to which the controller CU1 is fixed is arranged away from the operation section 44, whereby a situation is reliably avoided in which access to the controller CU1 from an upper side (or a lower side) relative to the controller CU1 is obstructed by the operation section 44. In addition, in order to efficiently improve the strength of the base plate 421, it is desirable to arrange the other vertical plate 422b close to the middle portion 421C of the base plate 421 in the left-right direction. From such a viewpoint, as in the present embodiment, in a configuration in which the hydraulic excavator 1 includes the tank TK (the fuel tank 453 in the present embodiment) arranged rightward in the left-right direction with respect to the middle portion 421C, it is desirable to adopt the following configuration. That is, the other vertical plate 422b is desirably arranged to be shifted leftward in the left-right direction with respect to the tank TK in plan view.

The hydraulic oil tank 62 is located backward of the fuel tank 453, and the first control valve 63 is located rightward of the hydraulic oil tank 62. Specifically, the first control valve 63 is located at a right side portion of the base plate 421. Therefore, the other control valve CV2 (the first control valve 63 in the present embodiment) is arranged rightward in the left-right direction with respect to the middle portion 421C of the base plate 421 in the left-right direction.

In a case where the other control valve CV2 is arranged on the same side as the side on which the operation section 44 is located, with respect to the middle portion 421C of the base plate 421 in the left-right direction, there is a possibility that part of an arrangement space of the operation section 44 is used as the arrangement space of the other control valve CV2. In this case, the arrangement space of the operation section 44 is narrowed, and interior comfort of the operation section 44 is decreased. Therefore, it is desirable to arrange the other control valve CV2 on a side opposite to the side on which the operation section 44 is located, with respect to the middle portion 421C of the base plate 421 in the left-right direction, thereby ensuring interior comfort of the operation section 44. From this viewpoint, as in the present embodiment, the other control valve CV2 is desirably arranged rightward in the left-right direction with respect to the middle portion 421C of the base plate 421 in the left-right direction.

In between the pair of vertical plates 422, besides the first control device 711, the second control valve 67 is also arranged. More specifically, the second control valve 67 is arranged in a position facing the fore of the first control device 711. In addition, regarding the arrangement position of the second control valve 67, the second control valve 67 is located to face the right side surface 422aR of the one vertical plate 422a. Therefore, the control valve CV1 (the second control valve 67 in the present embodiment) is arranged to face both the controller CU1 (the first control device 711 in the present embodiment) and the one vertical plate 422a. Note that the second control valve 67 is fixed to the base plate 421 via a first bracket BK1.

From viewpoints of collectively arranging related equipment and devices indirectly (or directly) related to the automatic operation of the hydraulic excavator 1 to simplify a connection configuration thereof, and effectively using a dead space located to face the one vertical plate 422a, it is desirable to adopt the following configuration. That is, as in the present embodiment, the hydraulic excavator 1 desirably includes the control valve CV1 (the second control valve 67 in the present embodiment) arranged to face both the controller CU1 (the first control device 711 in the present embodiment) and the one vertical plate 422a.

The second control valve 67 is also arranged to face the first connection plate 424 as well as the first control device 711 and the one vertical plate 422a. More specifically, a back surface of the first connection plate 424 faces backward, and the second control valve 67 is located in a position facing the back surface of the first connection plate 424. Therefore, the control valve CV1 (the second control valve 67 in the present embodiment) is arranged to face the connection plate CP1 (the first connection plate 424 in the present embodiment). Note that in the position facing the back surface of the first connection plate 424, besides the second control valve 67, the first control device 711 facing the second control valve 67 is located. That is, the controller CU1 (the first control device 711 in the present embodiment) is arranged to face the connection plate CP1 (the first connection plate 424 in the present embodiment).

From a viewpoint of improving the accessibility to the controller CU1 from the front of the base plate 421 (machine body 5) in a configuration in which the hydraulic excavator 1 includes the connection plate CP1 disposed at the front part side of the base plate 421 and connecting the pair of vertical plates 422, it is desirable to adopt the following configuration. That is, as in the present embodiment, the controller CU1 is desirably arranged to face the connection plate CP1.

The first connection plate 424 supports the second control device 712 from a lower side via a second bracket BK2. That is, the other controller CU2 (the second control device 712 in the present embodiment) is supported by the connection plate CP1 (the first connection plate 424 in the present embodiment). Note that in addition to the second control device 712, various electrical components (for example, a relay, a connector, and the like) are attached to the second bracket BK2.

Even in a case where the hydraulic excavator 1 includes, in addition to the controller CU1 and the control valve CV1, the other controller CU2 that is controlled by the controller CU1 and controls the control valve CV1, it is desirable to adopt the following configuration, from a viewpoint of reliably achieving simplification of a connection configuration of the related equipment and devices. That is, as in the present embodiment, the other controller CU2 is desirably supported by the connection plate CP1.

Note that similarly to the first control device 711, the second control valve 67 is located without overlapping the operation section 44 in plan view. Specifically, the second control valve 67 and the operation section 44 are located in a manner to be shifted from each other in the left-right direction. In particular, the second control valve 67 is located rightward relative to the operation section 44. That is, the control valve CV1 (the second control valve 67 in the present embodiment) is arranged to be shifted rightward in the left-right direction with respect to the operation section 44 in plan view.

From viewpoints of avoiding a situation in which access to the control valve CV1 from an upper side (or a lower side) relative to the control valve CV1 is obstructed by the operation section 44, and collectively arranging the control valve CV1 and the controller CU1 (the first control device 711 in the present embodiment), it is desirable to adopt the following configuration. That is, as in the present embodiment, the control valve CV1 is desirably arranged to be shifted rightward in the left-right direction with respect to the operation section 44 in plan view.

### [4-2. Arrangement configuration of control valve and the like]

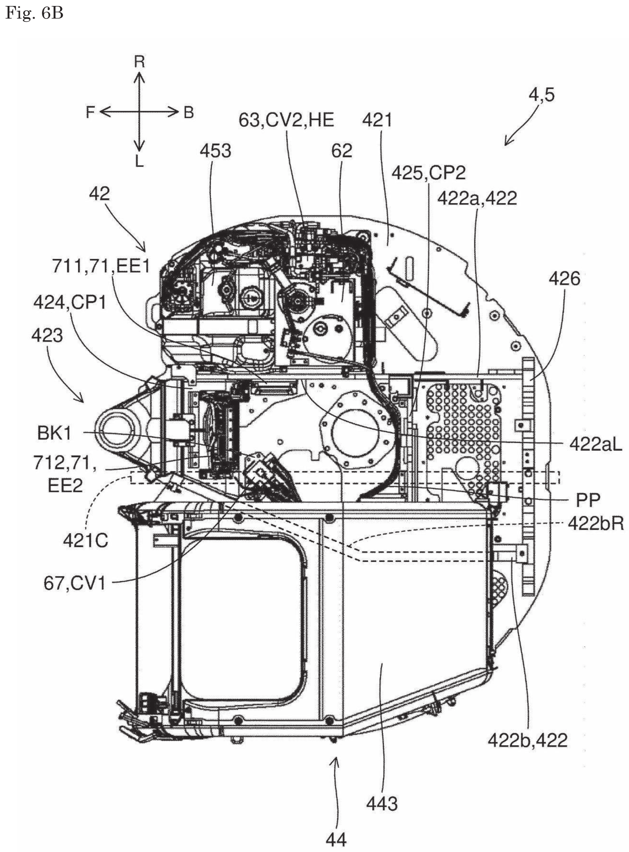

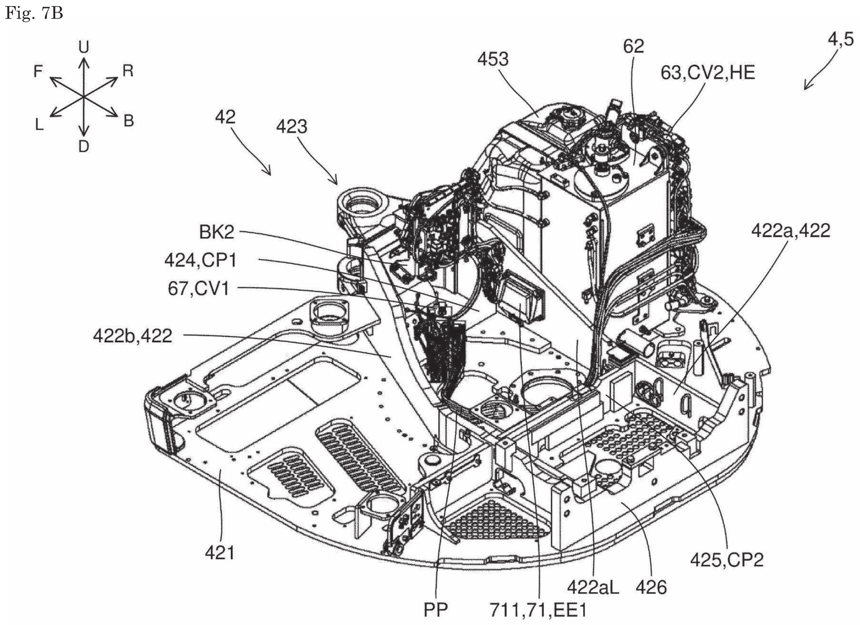

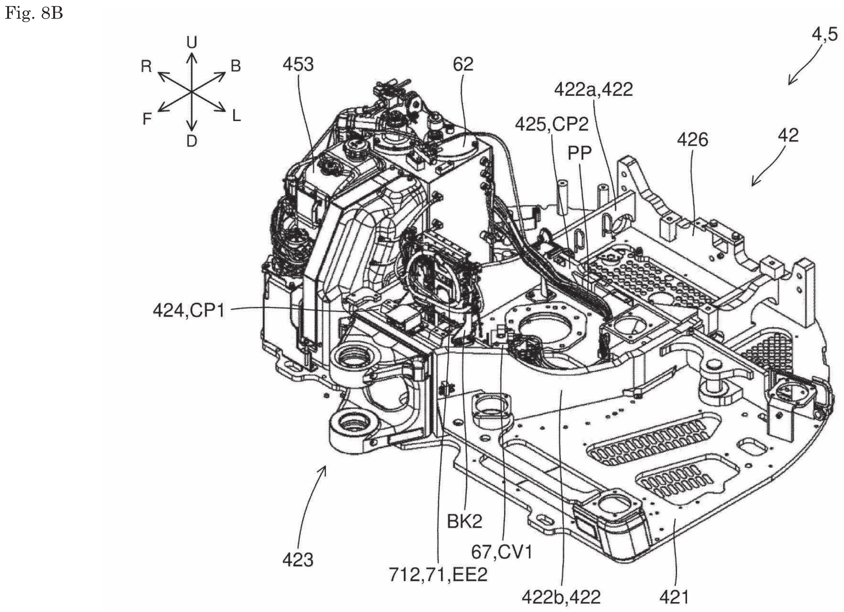

Figs. 6B, 7B, and 8B are, respectively, a plan view, a perspective view from a left back side, and a perspective view from a left front side, the views showing an arrangement configuration of the second control valve 67 and the like. In each of Figs. 7B and 8B, for convenience, illustration of the operation section 44 is omitted.

The second control valve 67 is arranged in the vicinity of a middle of the front portion of the base plate 421 via the first bracket BK1. More specifically, the second control valve 67 is arranged leftward of the one vertical plate 422a and rightward of the other vertical plate 422b. That is, the control valve CV1 (the second control valve 67 in the present embodiment) is arranged between the pair of vertical plates 422 (between the one vertical plate 422a and the other vertical plate 422b in the left-right direction). Note that a space between the pair of vertical plates 422 is located backward of the work unit 3, and thus this space is less likely to be used as an arrangement space for equipment and devices, for the purpose of avoidance of interference with the work unit 3, protection from earth, sand, or the like falling from the work unit 3, or the like. That is, the space between the pair of vertical plates 422 is a dead space.

According to the above configuration, for example, even in a small hydraulic excavator 1 having a limited space on the base plate 421, equipment and devices other than the control valve CV1 are rarely arranged in the space between the pair of vertical plates 422, and thus the control valve CV1 can be easily arranged. Thus, the control valve CV1 can be easily arranged.

From a viewpoint of reliably allocating a space for arranging the control valve CV1 (the second control valve 67 in the present embodiment) between the pair of vertical plates 422, it is desirable to adopt the following configuration. That is, as in the present embodiment, the one vertical plate 422a of the pair of vertical plates 422 is desirably arranged rightward, in the left-right direction of the machine body 5, with respect to the middle portion 421C of the base plate 421 in the left-right direction. In addition, the other vertical plate 422b of the pair of vertical plates 422 is desirably arranged leftward in the left-right direction with respect to the middle portion 421C of the base plate 421.

In between the pair of vertical plates 422, besides the second control valve 67, the first control device 711 is also arranged. That is, the electrical/electronic equipment EE1 (the first control device 711 in the present embodiment) is arranged between the pair of vertical plates 422. More specifically, the first control device 711 is arranged such that a rear surface thereof is in contact with the left side surface 422aL of the one vertical plate 422a, and is fixed with a fastening member such as a bolt. That is, the electrical/electronic equipment EE1 (the first control device 711 in the present embodiment) is attached to the one vertical plate 422a.

From viewpoints of arranging the electrical/electronic equipment EE1 (the first control device 711 in the present embodiment) such that one direction (for example, the long-side direction, the short-side direction, or the like) of the electrical/electronic equipment EE1 is parallel to the front-back direction of the machine body 5, and firmly attaching the electrical/electronic equipment EE1, it is desirable to adopt the following configuration. That is, as in the present embodiment, the electrical/electronic equipment EE1 is desirably attached to the one vertical plate 422a.

As described above, since the one vertical plate 422a is located to extend straight in the front-back direction, the fore of the first control device 711 is located to face leftward. The second control valve 67 is located in the position facing the fore of the first control device 711. That is, the control valve CV1 (the second control valve 67 in the present embodiment) is arranged to face the electrical/electronic equipment EE1 (the first control device 711 in the present embodiment).

From a viewpoint of collectively arranging the indirectly (or directly) related equipment and device to simplify a connection configuration thereof in a configuration in which the hydraulic excavator 1 includes the electrical/electronic equipment EE1 (the first control device 711 in the present embodiment) arranged between the pair of vertical plates 422, it is desirable to adopt the following configuration. That is, as in the present embodiment, the control valve CV1 (the second control valve 67 in the present embodiment) is desirably arranged to face the electrical/electronic equipment EE1.

The second control valve 67 is also arranged to face the first connection plate 424 as well as the first control device 711. More specifically, the back surface of the first connection plate 424 faces backward, and the second control valve 67 is located in the position facing the back surface of the first connection plate 424. Therefore, the control valve CV1 (the second control valve 67 in the present embodiment) is arranged to face the connection plate CP1 (the first connection plate 424 in the present embodiment).

From a viewpoint of improving the accessibility to the control valve CV1 from the front of the base plate 421 (machine body 5) in a configuration in which the hydraulic excavator 1 includes the connection plate CP1 disposed at the front part side of the base plate 421 and connecting the pair of vertical plates 422, it is desirable to adopt the following configuration. That is, as in the present embodiment, the control valve CV1 is desirably arranged to face the connection plate CP1.

The first connection plate 424 supports the second control device 712 from the lower side via the second bracket BK2. That is, the other electrical/electronic equipment EE2 (the second control device 712 in the present embodiment) is supported by the connection plate CP1 (the first connection plate 424 in the present embodiment).

Even in a case where the hydraulic excavator 1 includes, in addition to the electrical/electronic equipment EE1 and the control valve CV1, the other electrical/electronic equipment EE2 that is controlled by the electrical/electronic equipment EE1 and controls the control valve CV1, it is desirable to adopt the following configuration, from a viewpoint of reliably achieving simplification of a connection configuration of the related equipment and devices. That is, as in the present embodiment, the other electrical/electronic equipment EE2 is desirably supported by the connection plate CP1.

The fuel tank 453, the hydraulic oil tank 62, and the first control valve 63 are located on a part, of the base plate 421, located rightward relative to the one vertical plate 422a connected to the first connection plate 424. That is, the fuel tank 453, the hydraulic oil tank 62, and the other control valve CV2 (the first control valve 63 in the present embodiment) are arranged rightward in the left-right direction with respect to the one vertical plate 422a, on the base plate 421. More specifically, the fuel tank 453 and the hydraulic oil tank 62 are located side by side in the front-back direction. In particular, the fuel tank 453 is located in front of the hydraulic oil tank 62. The first control valve 63 is arranged adjacent to the hydraulic oil tank 62, to the right of the hydraulic oil tank 62.

By providing (adding) the control valve CV1 (the second control valve 67 in the present embodiment), which controls the hydraulic equipment HE, to the hydraulic excavator 1, it is necessary for the hydraulic equipment HE to control the operation of the machine body 5, in order to enable the machine body 5 to be operable with the automatic operation. From a viewpoint of reliably implementing the control on the operation of the machine body 5 with the hydraulic equipment HE, it is desirable to adopt the following configuration. That is, as in the present embodiment, the hydraulic equipment HE desirably includes the other control valve CV2 (the first control valve 63 in the present embodiment) that controls the flow direction and the flow rate of the hydraulic oil supplied from the hydraulic pump 61 (the main pump 611 in the present embodiment) to the hydraulic actuator 64.

If an abnormality occurs in the other control valve CV2 that controls the operation of the machine body 5, it is difficult to control the operation of the machine body 5. Therefore, it is desirable to arrange the other control valve CV2 at a position allowing easy access thereto from the outside of the machine body 5, and it is desirable to shorten a time required for repair work on the other control valve CV2 as much as possible even if an abnormality occurs in the other control valve CV2. In particular, it is desirable to arrange the other control valve CV2 such that the other control valve CV2 can be easily accessed from a side of the machine body 5. In addition, when the control valve CV1 is arranged, it is desirable to avoid interference with the other control valve CV2. From such a viewpoint, as in the present embodiment, the other control valve CV2 is desirably arranged rightward in the left-right direction with respect to the one vertical plate 422a, on the base plate 421.

The other vertical plate 422b connected to the first connection plate 424 is located to partially overlap the operation section 44 in plan view. The operation section 44 is arranged leftward relative to the middle portion 421C of the base plate 421 in the left-right direction. That is, the operation section 44 is arranged leftward in the left-right direction with respect to the middle portion 421C of the base plate 421 in the left-right direction. Note that the operation section 44 may be configured to overlap the entire other vertical plate 422b in plan view. That is, the operation section 44 is arranged to overlap at least a part of the other vertical plate 422b in plan view.

On the other hand, the operation section 44 is located without overlapping the second control valve 67 in plan view. Specifically, the operation section 44 and the second control valve 67 are located in a manner to be shifted from each other in the left-right direction. In particular, the second control valve 67 is located rightward relative to the operation section 44. That is, the operation section 44 is arranged to be shifted leftward in the left-right direction with respect to the control valve CV1 (the second control valve 67 in the present embodiment) in plan view.

Even in a case where the hydraulic excavator 1 includes the operation section 44, it is desirable to avoid a situation in which the operation section 44 obstructs access to the control valve CV1 from an upper side (or a lower side) relative to the control valve CV1 (the second control valve 67 in the present embodiment). In addition, it is desirable to improve accessibility to (ease of getting on and out of) the operation section 44 through the left side in the left-right direction, with respect to the machine body 5. From this viewpoint, it is desirable that the hydraulic excavator 1 includes the operation section 44 arranged to be shifted leftward in the left-right direction with respect to the control valve CV1 in plan view, as in the present embodiment.

For example, in a case where the operation section 44 is arranged to be shifted leftward in the left-right direction with respect to the other vertical plate 422b in plan view in order to improve the accessibility described above, there is a risk that an amount of protrusion of the operation section 44 from the base plate 421 increases. In order to downsize the machine body 5, it is desirable to suppress the increase in the amount of protrusion described above. From this viewpoint, as in the present embodiment, the operation section 44 is desirably arranged to overlap at least a part of the other vertical plate 422b in plan view.

The second control valve 67 and the first control valve 63 are connected via a pipe PP. That is, the pipe PP extends from the second control valve 67. Specifically, a plurality of pipes PP extending from the second control valve 67 is provided. A routing route of the pipes PP will be described below.

### [4-3. Routing route of pipes]

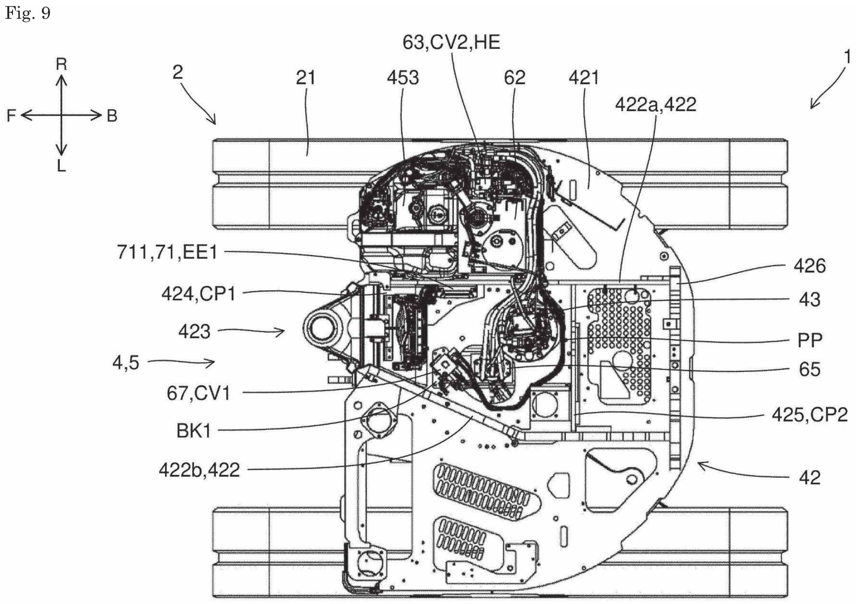

Fig. 9 is a plan view showing a routing route of the pipes PP. The pipe PP is routed through the vicinity of the turning motor 43 and the vicinity of the swivel joint 65 in plan view. The turning motor 43 is arranged on the base plate 421 of the turning frame 42, and the swivel joint 65 is arranged on the support body 2. More specifically, the turning motor 43 is arranged between the pair of vertical plates 422, on the base plate 421. In addition, the turning motor 43 is arranged between the first connection plate 424 and the second connection plate 425 in the front-back direction. The swivel joint 65 is located on the left front side of the turning motor 43 in plan view. The second control valve 67 is located in front of the swivel joint 65. Note that a part of the swivel joint 65 turns together with the turning body 4.

The routed pipe PP extends toward a left back side from the second control valve 67 and then is bent backward in plan view. The backward bending of the pipe PP is performed between the other vertical plate 422b and the swivel joint 65 in the left-right direction. That is, the pipe PP is routed through a space between the other vertical plate 422b and the swivel joint 65 in plan view.

The pipe PP extending backward is bent toward a right back side to extend to the vicinity of the second connection plate 425, and then is bent rightward. The pipe PP bent rightward extends between the turning motor 43 and the second connection plate 425 in the front-back direction. That is, the pipe PP is routed through a space between the turning motor 43 and the other connection plate CP2 (the second connection plate 425 in the present embodiment) in plan view.

The pipe PP having passed between the turning motor 43 and the second connection plate 425 extends beyond the one vertical plate 422a to the first control valve 63 located rightward relative to the one vertical plate 422a. That is, the pipe PP is routed from a right side in the left-right direction to a left side in the left-right direction with respect to the one vertical plate 422a. Note that the routing route of the pipe PP is not limited to the above route, and for example, the pipe PP may be routed through a through-hole provided penetrating the one vertical plate 422a in the left-right direction.

For example, in a case where the pipe PP extending from the control valve CV1 (the second control valve 67 in the present embodiment) is fixed to the turning motor 43, it is required to release the fixing of the pipe PP at the time of disassembling the turning motor 43. Therefore, in order to reduce the time and effort required for disassembling the turning motor 43, the pipe PP is desirably routed to be separated from the turning motor 43. In addition, it is desirable to efficiently route the pipe PP by effectively using a dead space between the turning motor 43 and the other connection plate CP2 (the second connection plate 425 in the present embodiment). From such a viewpoint, as in the present embodiment, in a configuration in which the hydraulic excavator 1 includes the turning motor 43 and the other connection plate CP2, the pipe PP is desirably routed through the space between the turning motor 43 and the other connection plate CP2 in plan view.

In a configuration in which the hydraulic excavator 1 includes the swivel joint 65, it is desirable to efficiently route the pipe PP by effectively using a dead space between the other vertical plate 422b and the swivel joint 65. From this viewpoint, as in the present embodiment, the pipe PP is desirably routed through the space between the other vertical plate 422b and the swivel joint 65 in plan view.

From the viewpoint of reliably achieving the configuration in which the pipe PP extending from the control valve CV1 (the second control valve 67 in the present embodiment) extends to equipment or a device (for example, the first control valve 63 or the like) located on a side, in the left-right direction, opposite to the side on which the control valve CV1 is located, with respect to the one vertical plate 422a, it is desirable to adopt the following configuration. That is, as in the present embodiment, the pipe PP is desirably routed from the right side in the left-right direction to the left side in the left-right direction with respect to the one vertical plate 422a.

### [5. Supplementary Notes]

The present embodiment is not limited to the embodiment described so far. For example, the arrangements of the components in the left-right direction may be reversed. That is, the components may be arranged at respective reversed positions relative to the respective positions in the examples in the embodiment described above, in the left-right direction.

In the present embodiment, the hydraulic excavator 1 has been described as an example of the work machine. However, the work machine is not limited to the hydraulic excavator 1. The work machine may be a construction machine such as a wheel loader or a mobile crane. In addition, the work machine may be an agricultural machine such as a combine harvester or a tractor.

### [6. Additional Notes]

The hydraulic excavator 1 described in the present embodiment can also be expressed as a work machine described in the following additional notes (1) to (13).

A work machine of additional note (1) includes:
a base plate that is located in a bottom portion of a machine body;
a pair of vertical plates that are disposed to extend in a front-back direction of the machine body, on the base plate; and
a controller that is arranged between the pair of vertical plates.

A work machine of additional note (2) is the work machine of additional note (1), further including
an operation section on which an operator rides to operate the machine body, in which
the operation section is arranged to overlap at least a part of one vertical plate of the pair of vertical plates in plan view, on a left side, in a left-right direction of the machine body, with respect to a middle portion of the base plate in the left-right direction.

A work machine of additional note (3) is the work machine of additional note (2), in which
the controller is arranged to be shifted rightward in the left-right direction with respect to the operation section in plan view.

A work machine of additional note (4) is the work machine of additional note (2) or (3), in which
the controller is attached to any one of the pair of vertical plates.

A work machine of additional note (5) is the work machine of additional note (4), in which
the controller is attached to another vertical plate of the pair of vertical plates.

A work machine of additional note (6) is the work machine of additional note (5), further including
a tank that is arranged rightward in the left-right direction with respect to the middle portion, in which
the other vertical plate is arranged to be shifted leftward in the left-right direction with respect to the tank in plan view.

A work machine of additional note (7) is the work machine of additional note (6), further including
a hood member that covers a right part side of the tank in the left-right direction.

A work machine of additional note (8) is the work machine of any one of additional notes (2) to (7), further including
a connection plate that is disposed at a front part side of the base plate, and that connects the pair of vertical plates, in which
the controller is arranged to face the connection plate.

A work machine of additional note (9) is the work machine of additional note (8), further including
a control valve that is arranged to face both the controller and the one vertical plate.

A work machine of additional note (10) is the work machine of additional note (9), in which
the control valve is arranged to be shifted rightward in the left-right direction with respect to the operation section in plan view.

A work machine of additional note (11) is the work machine of additional note (9) or (10), further including
another controller that is controlled by the controller, and that controls the control valve, in which
the other controller is supported by the connection plate.

A work machine of additional note (12) is the work machine of any one of additional notes (9) to (11), further including:
a hydraulic pump that is driven by a drive source;
a hydraulic actuator that is driven by hydraulic oil that is discharged from the hydraulic pump; and
another control valve that controls a flow direction of the hydraulic oil that is supplied from the hydraulic pump to the hydraulic actuator, in which
the control valve controls the other control valve.

A work machine of additional note (13) is the work machine of additional note (12), in which
the other control valve is arranged rightward in the left-right direction with respect to the middle portion.

In addition, the hydraulic excavator 1 described in the present embodiment can also be expressed as a work machine described in the following additional notes (14) to (25).

A work machine of additional note (14) includes:
a base plate that is located in a bottom portion of a machine body;
a pair of vertical plates that are disposed to extend in a front-back direction of the machine body, on the base plate;
hydraulic equipment that controls operation of the machine body; and
a control valve that controls the hydraulic equipment, in which
the control valve is arranged between the pair of vertical plates.

A work machine of additional note (15) is the work machine of additional note (14), in which
the pair of vertical plates include one vertical plate that is arranged rightward, in a left-right direction of the machine body, with respect to a middle portion of the base plate in the left-right direction, and
the pair of vertical plates include another vertical plate that is arranged leftward in the left-right direction with respect to the middle portion.

A work machine of additional note (16) is the work machine of additional note (15), further including:
a hydraulic pump that is driven by a drive source; and
a hydraulic actuator that is driven by hydraulic oil that is discharged from the hydraulic pump, in which
the hydraulic equipment includes another control valve that controls a flow direction of the hydraulic oil that is supplied from the hydraulic pump to the hydraulic actuator, and
the other control valve is arranged rightward in the left-right direction with respect to the one vertical plate, on the base plate.

A work machine of additional note (17) is the work machine of additional note (15) or (16), further including
an operation section that is arranged to be shifted leftward in the left-right direction with respect to the control valve in plan view.

A work machine of additional note (18) is the work machine of additional note (17), in which
the operation section is arranged to overlap at least a part of the other vertical plate in plan view.

A work machine of additional note (19) is the work machine of any one of additional notes (15) to (18), further including
a connection plate that is disposed at a front part side of the base plate, and that connects the pair of vertical plates, in which
the control valve is arranged to face the connection plate.

A work machine of additional note (20) is the work machine of additional note (19), further including
electrical/electronic equipment that is arranged between the pair of vertical plates, in which
the control valve is arranged to face the electrical/electronic equipment.

A work machine of additional note (21) is the work machine of additional note (20), further including
other electrical/electronic equipment that is controlled by the electrical/electronic equipment, and that controls the control valve, in which
the other electrical/electronic equipment is supported by the connection plate.

A work machine of additional note (22) is the work machine of additional note (20) or (21), in which
the electrical/electronic equipment is attached to the one vertical plate.

A work machine of additional note (23) is the work machine of any one of additional notes (19) to (22), further including:
a support body that supports the machine body in a turnable manner;
a turning motor that is arranged on the base plate, and that turns the machine body with respect to the support body; and
another connection plate that is disposed at a back part side of the base plate, and that connects the pair of vertical plates, in which
a pipe that extends from the control valve is routed through a space between the turning motor and the other connection plate in plan view.

A work machine of additional note (24) is the work machine of additional note (23), further including
a swivel joint that allows a first oil passage of the machine body and a second oil passage of the support body to communicate with each other, in which
the pipe is routed through a space between the other vertical plate and the swivel joint in plan view.

A work machine of additional note (25) is the work machine of additional note (23) or (24), in which
the pipe is routed from a right side in the left-right direction to a left side in the left-right direction with respect to the one vertical plate.

Although the embodiments of the present invention have been described above, the scope of the present invention is not limited thereto. The present invention can be implemented by being expanded or modified within a scope not departing from the gist of the invention.

### [Industrial Applicability]

The present invention is applicable to a work machine such as a construction machine or an agricultural machine.

### LIST OF REFERENCE SIGNS

- 1: Hydraulic excavator (work machine)
- 2: Support body
- 5: Machine body
- 5D: Bottom portion
- 43: Turning motor
- 44: Operation section
- 61: Hydraulic pump
- 64: Hydraulic actuator
- 65: Swivel joint
- 421: Base plate
- 421C: Middle portion
- 422: Pair of vertical plates
- 422a: One vertical plate
- 422b: Other vertical plate
- 451a: Hood member
- 454: Engine (drive source)
- CP1: Connection plate
- CP2: Other connection plate
- CU1: Controller
- CU2: Other controller
- CV1: Control valve
- CV2: Other control valve
- EE1: Electrical/electronic equipment
- EE2: Other electrical/electronic equipment
- HE: Hydraulic equipment
- HP1: First oil passage
- HP2: Second oil passage
- PP: Pipe
- TK: Tank

## Claims

1. A work machine comprising:
a base plate that is located in a bottom portion of a machine body;
a pair of vertical plates that are disposed to extend in a front-back direction of the machine body, on the base plate; and
a controller that is arranged between the pair of vertical plates.

2. The work machine according to claim 1, further comprising
an operation section on which an operator rides to operate the machine body, wherein
the operation section is arranged to overlap at least a part of one vertical plate of the pair of vertical plates in plan view, on a left side, in a left-right direction of the machine body, with respect to a middle portion of the base plate in the left-right direction.

3. The work machine according to claim 2, wherein the controller is arranged to be shifted rightward in the left-right direction with respect to the operation section in plan view.

4. The work machine according to claim 2, wherein the controller is attached to any one of the pair of vertical plates.

5. The work machine according to claim 4, wherein the controller is attached to another vertical plate of the pair of vertical plates.

6. The work machine according to claim 5, further comprising a tank that is arranged rightward in the left-right direction with respect to the middle portion, wherein
the other vertical plate is arranged to be shifted leftward in the left-right direction with respect to the tank in plan view.

7. The work machine according to claim 6, further comprising a hood member that covers a right part side of the tank in the left-right direction.

8. The work machine according to any one of claims 2 to 7, further comprising
a connection plate that is disposed at a front part side of the base plate, and that connects the pair of vertical plates, wherein
the controller is arranged to face the connection plate.

9. The work machine according to claim 8, further comprising a control valve that is arranged to face both the controller and the one vertical plate.

10. The work machine according to claim 9, wherein the control valve is arranged to be shifted rightward in the left-right direction with respect to the operation section in plan view.

11. The work machine according to claim 9, further comprising another controller that is controlled by the controller, and that controls the control valve, wherein
the other controller is supported by the connection plate.

12. The work machine according to claim 9, further comprising:
a hydraulic pump that is driven by a drive source;
a hydraulic actuator that is driven by hydraulic oil that is discharged from the hydraulic pump; and
another control valve that controls a flow direction of the hydraulic oil that is supplied from the hydraulic pump to the hydraulic actuator, wherein
the control valve controls the other control valve.

13. The work machine according to claim 12, wherein the other control valve is arranged rightward in the left-right direction with respect to the middle portion.

14. A work machine comprising:
a base plate that is located in a bottom portion of a machine body;
a pair of vertical plates that are disposed to extend in a front-back direction of the machine body, on the base plate;
hydraulic equipment that controls operation of the machine body; and
a control valve that controls the hydraulic equipment, wherein
the control valve is arranged between the pair of vertical plates.

15. The work machine according to claim 14, wherein
the pair of vertical plates include one vertical plate that is arranged rightward, in a left-right direction of the machine body, with respect to a middle portion of the base plate in the left-right direction, and
the pair of vertical plates include another vertical plate that is arranged leftward in the left-right direction with respect to the middle portion.

16. The work machine according to claim 15, further comprising:
a hydraulic pump that is driven by a drive source; and
a hydraulic actuator that is driven by hydraulic oil that is discharged from the hydraulic pump, wherein
the hydraulic equipment includes another control valve that controls a flow direction of the hydraulic oil that is supplied from the hydraulic pump to the hydraulic actuator, and
the other control valve is arranged rightward in the left-right direction with respect to the one vertical plate, on the base plate.

17. The work machine according to claim 16, further comprising
an operation section that is arranged to be shifted leftward in the left-right direction with respect to the control valve in plan view.

18. The work machine according to claim 17, wherein
the operation section is arranged to overlap at least a part of the other vertical plate in plan view.

19. The work machine according to claim 2, further comprising
a connection plate that is disposed at a front part side of the base plate, and that connects the pair of vertical plates, wherein
the control valve is arranged to face the connection plate.

20. The work machine according to claim 6, further comprising
electrical/electronic equipment that is arranged between the pair of vertical plates, wherein
the control valve is arranged to face the electrical/electronic equipment.
